# EUROPEAN PATENT SPECIFICATION

(11) **EP 2 205 653 B1**
(45) Date of publication and mention of the grant of the patent: **24.04.2013**
(21) Application number: 08844030.0
(22) Date of filing: 27.10.2008
(51) Int. Cl.: C08G 18/58, C08G 18/76, C09D 175/04, C08G 18/00, C08G 18/28, C08G 59/40, C09D 5/03

(54) **NON-SINTERING ISOCYANATE MODIFIED EPOXY RESIN FOR FUSION BONDED EPOXY APPLICATIONS**
NICHTSINTERNDES ISOCYANATMODIFIZIERTES EPOXIDHARZ FÜR FUSION-BONDED-EPOXY-ANWENDUNGEN
RÉSINE ÉPOXY À MODIFICATION ISOCYANATE NON FRITTÉE POUR APPLICATIONS ÉPOXY RELIÉES PAR FUSION

(30) Priority: 31.10.2007 US 984179 P
(43) Date of publication of application: 14.07.2010
(73) Proprietor: Dow Global Technologies LLC, Midland, MI 48674 (US)
(72) Inventor: LIAO, Zeng, Kun, Lake Jackson TX 77566 (US); AGUIRRE, Fabio, Vargas, Lake Jackson TX 77566 (US); HA, Pham, Q., Lake Jackson TX 77566 (US); GULYAS, Gyongyi, Lake Jackson TX 77566 (US)
(74) Representative: Raynor, John
(86) International application number: PCT/US2008/081281
(87) International publication number: WO 2009/058715

(56) References cited:
- EP-A1- 0 113 575
- WO-A1-2009/035860
- GB-A- 2 093 035
- US-A- 5 112 932

## Description

### BACKGROUND OF THE INVENTION

### Field of the Invention

The present invention relates generally to substantially sinter-free isocyanate modified epoxy resins for fusion-bonded epoxy coating applications and to powder coating compositions which comprise these resins. The compositions may be suitable, among other things, for making corrosion protection Fusion-Bonded Epoxy (FBE) coatings or primers for pipelines through which hydrocarbons are transported from production facilities to processing facilities at high temperatures (>110°C).

### Discussion of Background Information

As the service temperatures of oil and gas pipelines increase due to the exploitation of ultra deep reservoirs and tar sands, the pipe coating industry has been developing high performance corrosion protection coatings and insulating multilayer systems to meet the industry needs. Currently, the pipe coating industry can provide cost-effective FBE coatings systems to meet the requirements for corrosion protection of pipelines operating at temperatures of up to about 140°C. However, it has been predicted that the next generation of high service temperature pipelines will operate at even higher temperatures. To meet this requirement, the pipe coating industry needs FBE coating or primers systems that are able to protect from corrosion pipelines operating at higher service temperatures. Further, in order to be cost competitive the FBE coating or primer systems must be applicable by using state-of-the-art powder coating technology.

A key ingredient in an FBE coating composition is a Solid Epoxy Resin (SER), which determines the properties of the coating to a high extent. One strongly desirable property of an SER for use in FBE coating applications is an onset glass transition temperature, Tg, which is at least about 45°C, to avoid sintering or fusion of the resin pellets under the hot and humid conditions which are frequently encountered, especially in summer, in non air-conditioned warehouses or during transportation of the resin or the powder coating formulation based thereon.

Once formulated into a powder coating composition, the SER also needs to impart a good balance of physical properties to the FBE coating. One important property of the finished FBE coating is an onset glass transition temperature that should be higher than the service temperature of the substrate. Another desirable property of the FBE coating is a good adhesion to the substrate.

US 5,112,932 describes epoxy-terminated polyoxazolidones having from about 5 to about 30 weight percent of the isocyanate content. These polyoxazolidones are prepared by a process in which various process parameters are controlled in a targeted manner to give a product having from about 50 to about 100 percent of isocyanate groups converted to oxazolidone rings and from about 0 to about 50 percent of the isocyanate groups converted to isocyanurate rings. These epoxy terminated polyoxazolidones exhibit high glass transition temperatures and high resistance to chemicals when cured. They are useful for the preparation of electrical laminates, particularly laminates used in the preparation of electrical circuit boards.

GB 2 093 035 describes a crosslinked resin excellent in heat resistance, toughness, moisture resistance and adhesiveness which can be obtained by the use of an epoxy compound having both alcoholic hydroxyl groups and epoxy groups in its molecule and an isocyanate compound having isocyanate groups in its molecule by first reacting the alcoholic hydroxyl groups of said epoxy compound and the isocyanate groups of said isocyanate compound to produce an epoxy prepolymer having urethane linkages stable at room temperature, followed by dissociating the urethane linkages of the prepolymer to regenerate the isocyanate groups and reacting said isocyanate groups with the epoxy groups of said epoxy compound. By carrying out the above-mentioned reaction between the isocyanate groups and the epoxy groups in the presence of at least one member selected from the group consisting of amine compounds, carboxylic acid anhydrides, phenol novolac compounds and polyvinyl-phenol compounds and/or a bisimide compound, a crosslinked resin having higher heat resistance can be produced. Said prepolymer is excellent in storage stability and suitable for use in the production of laminates.

EP 0 113 575 describes powder coating compositions which comprise epoxy-terminated polyoxazolidone resins prepared by reacting a diepoxide and a diisocyanate in amounts which provide a ratio of epoxide equivalents to isocyanate equivalents from 10:1 to 1.1:1, and curing agents. The polyoxazolidones have an epoxy equivalent weight from 250 to 4000. Such polyoxazolidones can be used alone or in combination with conventional epoxy resins and have comparatively high glass transition temperatures and provide coatings of improved resistance to cathodic disbondment.

WO 2009/035860 describes thermosetting powder coating compositions, wherein the compositions comprise an epoxy-terminated oxazolidinone-isocyanurate polymer and are capable of forming a foam when applied to a substrate in a powder coating process, as well as methods of making and uses of such compositions.

It has now unexpectedly been found that by using a particular type of epoxy resin and one or more polyisocyanate compounds for making an isocyanate modified epoxy resin, it is possible to produce an SER with an onset glass transition temperature of at least about 45°C which, when incorporated into a powder coating composition, is capable of providing an FBE coating that has an onset glass transition temperature of at least about 160°C.

### SUMMARY OF THE INVENTION

The present invention provides a thermosetting epoxy-terminated oxazolidinone ring containing polymer, wherein the polymer is obtainable by reacting at least one of (a1) at least one hydroxy group containing epoxy resin and (a2) a combination of at least one epoxy resin and at least one di- or multifunctional nucleophilic compound that forms crosslinks between epoxy groups with (b) two or more polyisocyanate compounds comprising toluene diisocyanate (TDI) and polymeric MDI in the presence of (c) at least one catalyst which promotes formation of oxazolidinone rings and a branching of the polymer and wherein the polymer in an uncured state has an onset glass transition temperature of at least 45°C and shows an onset glass transition temperature in a cured state of at least 160°C as determined by Differential Scanning Calorimetry (DSC).

In one aspect of the instant polymers, the two or more polyisocyanate compounds comprises a blend of toluene diisocyanate (TDI) and polymeric MDI. For example, the weight ratio of polymeric MDI to TDI may be from about 10:90 to about 90:10.

In another aspect of the instant polymers, the at least one hydroxy group-containing epoxy resin may comprise a hydroxy group-containing diglycidyl ether. For example, at least about 10% (and preferably at least about 20%) of the diglycidyl ether molecules may be hydroxy group-containing oligomers.

In another aspect of the instant polymers, (a1) may comprise diglycidyl ether of bisphenol A.

In another aspect, the weight ratio (a1):(b) may be from about 75:25 to about 85:15. For example, it may be from about 77:23 to about 81:19, e.g., from about 78:22 to about 80:20.

The instant polymers also comprise at least one catalyst (c) such as, e.g., an imidazole, like 2-phenyl-imidazole, preferably in a concentration of from about 100 to about 2000 ppm, based on the total polymer.

In yet another aspect of the polymers of the present invention, the (molar) ratio of oxazolidinone rings to isocyanurate rings in the polymers may be from about 95:5 to about 100:0 and/or the polymers may have an epoxy equivalent weight of at least about 400 eq/gr.

In a still further aspect of the instant polymers, these polymers may be suitable for use in powder coating compositions for producing fusion-bonded epoxy (FBE) coatings.

The present invention also provides thermosetting powder coating compositions which comprise (a) one or more thermosetting polymers according to the present invention as set forth above (including the various aspects thereof) and (b) one or more curing catalysts for the thermosetting polymer(s).

In one aspect, these compositions may comprise from about 10% to about 99% by weight of (a), based on the total weight of the composition.

The present invention also provides a method for providing a substrate with a fusion-bonded epoxy (FBE) coating or primer and a substrate that has been coated by this method. The method comprises subjecting the substrate to a powder-coating process with the powder-coating composition according to the present invention as set forth herein.

In one aspect of the method, the substrate may comprise a metal (e.g., steel) substrate and/or the substrate may comprise a pipe.

The present invention also provides a substrate that carries thereon a fusion-bonded epoxy coating made from the powder-coating composition according to the present invention as set forth herein.

In one aspect of the substrate, the fusion-bonded epoxy coating thereon may have an onset glass transition temperature at least about 160°C.

The present invention also provides a method of making an epoxy-terminated oxazolidinone ring containing polymer, wherein the method comprises
(i) adding, under conditions which favor a formation of oxazo lidinone rings over a formation of isocyanurate rings, two or more polyisocyanate compounds comprising toluene diisocyanate (TDI) and polymeric MDI to a mixture of (a1) at least one hydroxy group containing epoxy resin and/or (a2) a combination of at least one epoxy resin and at least one di- or multifunctional nucleophilic compound that forms crosslinks between epoxy groups and (b) at least one compound which catalyzes a reaction between epoxy groups and isocyanate groups and promotes a branching of the polymer; wherein the addition step is carried out at a temperature of at least 150°C, and
(ii) upon completion of the addition according to (i), keeping a resultant mixture at a temperature of at least 160°C for a time which is sufficient for an epoxy-terminated oxazolidinone ring containing polymer to branch in the presence of (b) and to afford an onset glass transition temperature of the polymer of at least 45°C. The method comprises the addition of at two or more polyisocyanate compounds (for example, a blend of polyisocyanate compounds,
which comprises toluene diisocyanate (TDI) and polymeric 4,4'-methylene bis(phenylisocyanate) (polymeric MDI)) to a mixture of (a1) at least one (preferably liquid) hydroxy group-containing epoxy resin and/or (a2) a combination of at least one epoxy resin and at least one di- or multifunctional nucleophilic compound that is capable of forming crosslinks between epoxy groups and (b) at least one compound that is capable of catalyzing the reaction between epoxy groups and isocyanate groups. The addition is carried out under conditions (for example, at a rate and at a temperature) which favor the formation of oxazolidinone rings over the formation of isocyanurate rings. Upon completion of the addition the resultant mixture is kept at an elevated temperature for a time which is sufficient to afford an epoxy-terminated oxazolidinone ring containing polymer which has an onset glass transition temperature of at least about 45°C.

In one aspect of the method, the addition of the two or more polyisocyanate compounds may be carried out in two or more steps. For example, the TDI and the polymeric MDI may be added separately and/or a mixture of TDI and polymeric MDI may be added.

In another aspect, the addition may be carried out at a temperature of at least about 150°C, e.g., at least about 155°C or at least about 160°C.

In yet another aspect of the instant method, the elevated holding temperature may be at least about 160°C.

In a still further aspect, the at least one epoxy resin may comprise a hydroxy group containing bisphenol A diglycidyl ether. For example, at least about 10% (and preferably at least about 20%) of the diglycidyl ether molecules may be hydroxy group-containing oligomers.

In another aspect, the weight ratio of polymeric MDI to TDI may be from about 10:90 to about 90:10 and/or the produced polymer may have an epoxy equivalent weight of at least about 400.

The present invention also provides a polymer which has been made by the process according to the present invention as set forth herein (including the various aspects thereof).

Other features and advantages of the present invention will be set forth in the description of invention that follows, and will be apparent, in part, from the description or may be learned by practice of the invention. The invention will be realized and attained by the compositions, products, and methods particularly pointed out in the written description and claims hereof.

### BRIEF DESCRIPTION OF THE DRAWINGS

The present invention is further described in the detailed description which follows, in reference to the drawings by way of non-limiting examples of exemplary embodiments of the present invention, wherein:
Figure 1 represents a DSC thermogram for determining the onset glass transition temperature of the polymer of Example 6 below;
Figure 2 represents a DSC thermogram for determining the onset glass transition temperature of the cured powder coating composition of Example 12 below;
Figure 3 represents a DSC thermogram for determining the onset glass transition temperature of the FBE coating made from the powder coating composition of Example 12 below;
Figure 4 represents a graph that shows the polymer EEW and the polymer onset glass transition temperature as a function of the digestion time for the polymer of Example 7b below;
Figure 5 represents a graph that shows the polymer onset glass transition temperature as a function of the polymer Epoxy Equivalent Weight (EEW) for the polymer of Example 7b below;
Figure 6 represents a graph that shows the melt viscosity as a function of the polymer EEW for the polymer of Example 7b below;
Figure 7 represents a graph that shows the polymer EEW and the polymer onset glass transition temperature as a function of the digestion time for the polymer of Example 7c below;
Figure 8 represents a graph that shows the polymer onset glass transition temperature as a function of the polymer EEW for the polymer of Example 7c below;
Figure 9 represents a graph that shows the melt viscosity as a function of the polymer EEW for the polymer of Example 7c below; and
Figure 10 represents a graph that shows the polymer onset glass temperature as a function of the polymer EEW for the polymers of Examples 7b and 7c below.

### DETAILED DESCRIPTION OF THE PRESENT INVENTION

Unless otherwise stated, a reference to a compound or component includes the compound or component by itself, as well as is combination with other compounds or components, such as mixtures of compounds.

As used herein, the singular forms "a", "an", and "the" include the plural reference unless the context clearly dictates otherwise.

Except where otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not to be considered as an attempt to limit the application of the doctrine of equivalents to the scope of the claims, each numerical parameter should be construed in light of the number of significant digits and ordinary rounding conventions.

Additionally, the recitation of numerical ranges within this specification is considered to be a disclosure of all numerical values and ranges within that range. For example, if a range is from about 1 to about 50, it is deemed to include, for example, 1, 7, 34, 46.1, 23.7, or any other value or range within the range.

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show embodiments of the present invention in more detail than is necessary for the fundamental understanding of the present invention, the description making apparent to those skilled in the art how the several forms of the present invention may be embodied in practice.

The thermosetting epoxy-terminated oxazolidinone ring containing polymers of the present invention preferably comprise the reaction product of at least one (preferably, but not limited to, liquid) hydroxy group containing epoxy resin and two or more polyisocyanate compounds comprising toluene diisocyanate (TDI) and polymeric MDI, and a suitable catalyst.

The hydroxy group containing epoxy resin may be a single resin or a mixture of two or more epoxy resins. If more than one epoxy resin is present, at least one of these epoxy resins (and preferably all of them) contain hydroxy groups. By way of non-limiting example, preferably more than about 7%, e.g., at least about 10%, e.g., at least about 15%, or at least about 20% of the molecules of the epoxy resin(s) comprise one or more hydroxy groups.

Non-limiting specific examples of hydroxy group containing epoxy resins which may be used for the production of the thermosetting isocyanate modified epoxy-terminated polymers of the present invention include diglycidyl ethers of diols such as, e.g., bisphenol A, brominated bisphenol A, bisphenol F, bisphenol K (4,4'-dihydroxybenzophenone), bisphenol S (4,4'-dihydroxyphenyl sulfone), hydroquinone, resorcinol, 1,1-cyclohexanebisphenol, ethylene glycol, propylene glycol, diethylene glycol, dipropylene glycol, butanediol, hexanediol, cyclohexanediol, 1,4-bis(hydroxymethyl)benzene, 1,3-bis(hydroxymethyl)benzene, 1,4-bis(hydroxymethyl)cyclohexane and 1,3-bis(hydroxymethyl)cyclohexane; diglycidyl esters of dicarboxylic acids such as, e.g., hexahydrophthalic acid; diepoxy compounds such as, e.g., cyclooctene diepoxide, divinylbenzene diepoxide, 1,7-octadiene diepoxide, 1,3-butadiene diepoxide, 1,5-hexadiene diepoxide and the diepoxide of 4-cyclohexenecarboxylate 4-cyclohexenylmethyl ester; and glycidyl ether derivatives of novolacs such as phenol novolac, cresol novolac and bisphenol A novolac. Mixtures of two or more of these epoxy resins may be used as well.

A preferred example of an epoxy resin for use in the present invention includes a hydroxy group-containing diglycidyl ether of a bisphenol such as, e.g., bisphenol A. It is particularly preferred if at least about 20%, e.g., at least about 50%, at least about 70%, at least about 80%, or at least about 90% by weight (e.g., about 100%), of all epoxy resins used for the production of the polymer of the present invention comprise diglycidyl ethers of one or more-bisphenols such as, e.g., bisphenol A. The bisphenol (A) diglycidyl ether preferably comprises oligomers (e.g., oligomers produced during the reaction of, e.g., bisphenol A and epichlorohydrin in the presence of alkali) in a proportion such that at least about 10%, preferably at least about 20% of all diglycidyl ether molecules comprise one or more hydroxy groups. The epoxy equivalent weight (EEW, defined herein as the (average) molecular weight divided by the number of epoxy groups per molecule) of the diglycidylether of bisphenol A may, for example, be at least about 180, but will usually be not higher than about 250, e.g., not higher than about 230, or not higher than about 210.

The preferred isocyanate starting material for the production of the thermosetting resin of the present invention comprises at least two components, i.e., TDI and polymeric MDI. Preferably, the weight ratio polymeric MDI:TDI is at least about 10:90, e.g., at least about 55:45, or at least about 60:40, but will usually be not higher than about 90:10. In another example, the weight ratio of polymeric MDI:TDI may be from about 50:50 to about 90:10.

The polymeric MDI will often have an average isocyanate functionality (i.e., an average number of isocyanate groups per molecule) of not higher than about 3.5, e.g., not higher than about 3, not higher than about 2.8, or not higher than about 2.7, but usually not lower than about 2.1, e.g., not lower than about 2.2, or not lower than about 2.3.

The TDI for use in making the thermosetting polymer of the present invention may be a mixture of the 2,4- and 2,6-isomers. Commercially available TDI often contains these isomers in a ratio of about 80:20 (2,4:2,6), but any other isomer ratios such as, e.g., about 50:50, about 65:35 about 100:0 and about 0:100 are suitable as well.

In addition to the TDI and the polymeric MDI components, the isocyanate starting material for making the polymer of the present invention may comprise one or more additional isocyanate compounds. Non-limiting specific examples of such isocyanate compounds include (monomeric) MDI, methane diisocyanate, butane diisocyanate (e.g., butane-1,1-diisocyanate), ethylene-1,2-diisocyanate, trans-vinylene diisocyanate, propane-1,3-diisocyanate, 2-butene-1,4-diisocyanate, 2-methylbutane-1,4-diisocyanate, hexane-1,6-diisocyanate, octane-1,8-diisocyanate, diphenylsilane diisocyanate, benzene-1,3-bis(methyleneisocyanate), benzene-1,4-bis(methyleneisocyanate), isophorone diisocyanate, cyclohexane-1,3-bis(methyleneisocyanate), 4,4'-methylene-bis(cyclohexylisocyanate) (H₁₂MDI), 1,3- and 1,4-bis(isocyanate) methyl cyclohexane (ADI), isomers of xylenediisocyanate, bis(4-benzeneisocyanate) ether, bis(4-benzeneisocyanate) sulfide and bis(4-benzeneisocyanate) sulfone; and mixtures thereof.

It is particularly preferred if at least about 20%, e.g., at least about 50%, at least about 70%, at least about 80%, or at least about 90% by weight (e.g., about 100%) of the isocyanate starting materials for the preparation of the thermosetting polymers of the present invention are composed of polymeric MDI or a mixture of TDI and polymeric MDI.

The reaction of the epoxy groups and the isocyanate groups in the presence of a catalyst can result in two predominant types of ring structures, i.e., isocyanurate rings (through trimerization of isocyanate groups) and oxazolidinone rings (through reaction of an isocyanate group with an epoxy group). For example, the reaction of a diepoxy compound and a diisocyanate compound (carried out in the presence of a suitable catalyst at elevated temperature) can schematically be represented as follows:

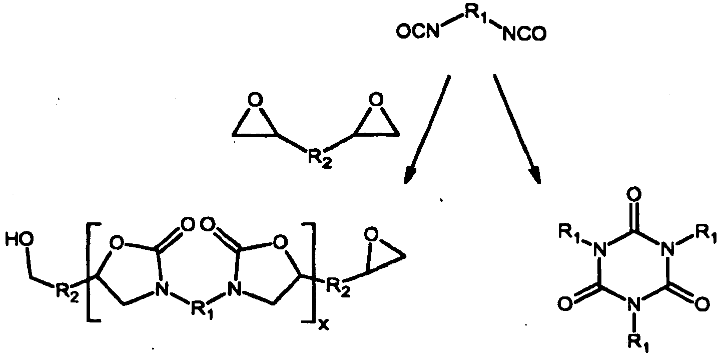

In the above reaction scheme, R₁ represents a divalent residue of an aromatic diisocyanate (for example, in the case of TDI it represents CH₃-C₆H₃ and in the case of polymeric MDI it represents -C₆H₄-[CH₂-C₆H₃NCO]ₘ-CH₂-C₆H₄- with m = 1, 2, 3, etc.), and R₂ represents a divalent residue of a diepoxide (for example, in the case of the diglycidyl ether of bisphenol A, it represents CH₂-O-C₆H₄-C(CH₃)₂-C₆H₄-O-CH₂).

The ratio oxazolidinone rings : isocyanurate rings in the thermosetting polymer of the present invention (as can be determined by, e.g., FT-IR peak heights at 1750 and 1710 cm⁻¹ for oxazolidinone and the isocyanurate, respectively) will usually be at least about 95:5 (and up to about 100:0). Preferably, the ratio will be at least about 98:2, e.g., at least about 99:1. In other words, the average value of x in the above scheme is preferably close to 0.

The ratio of oxazolidinone rings to isocyanurate rings can be influenced by varying parameters such as, e.g., reaction temperature, amount and type of catalyst(s), relative ratio of epoxy and isocyanate compounds, and rate of addition of the isocyanate component. In this regard, U.S. Patent No. 5,112,932, for example, be referred to. The Examples below illustrate ways in which the desired high ratio of oxazolidinone rings to isocyanurate rings in an epoxy-terminated isocyanate modified polymer can be obtained.

The thermosetting polymer of the present invention can be prepared in a manner which is well known to those skilled in the art. In this regard, U.S. Patent No. 5,112,932 and EP 0 113 575 A1 may, for example, be referred to.

Non-limiting examples of suitable catalysts for the polymer formation, i.e., the formation of oxazolidinone rings (and isocyanurate rings) include nucleophilic amines and phosphines, ammonium and phosphonium salts. Specific examples thereof include nitrogen heterocycles such as, e.g., alkylated imidazoles (for example, 2-phenylimidazole, 2-methylimidazole, 1-methylimidazole, 2-methyl-4-ethylimidazole and 4,4'-methylene-bis(2-ethyl-5-methylimidazole); other heterocycles such as 1,8-diazabicyclo[5.4.0]undec-7-ene (DBU), diazabicyclooctene, hexamethylenetetramine, morpholine, piperidine; trialkylamines such as triethylamine, trimethylamine, benzyldimethylamine; phosphines such as triphenylphosphine, tritolylphosphine and triethylphosphine; quaternary ammonium and phosphonium salts such as triethylammonium chloride, tetraethylammonium chloride, tetraethylammonium acetate, tetraethyl ammonium bromide, benzyl triethyl ammonium chloride, triphenylphosphonium acetate, triphenylphosphonium iodide, ethyl triphenyl phosphonium iodide, and benzyl triphenyl phosphonium bromide. Lewis acids based on Al, Fe, Mg, or Zn such as, e.g., zinc carboxylate, organozinc chelate compounds, stannous octoate, and trialkyl aluminum compounds, and antimony containing catalysts, such as, e.g., triorganoantimony di- and tetraiodide are further non-limiting examples of catalysts that may be used for the production of the polymer of the present invention (of course, more than one catalyst may be used). The preferred catalysts are imidazole compounds. Particularly preferred catalysts are 2-phenylimidazole, 2-methylimidazole, 1-methylimidazole, 2-ethyl-4-methylimidazole, and 4,4'-methylene-bis(2-ethyl-5-methylimidazole); and mixtures thereof.

The catalyst or mixture of catalysts is generally employed in an amount of from about 0.01 % to about 2 %, e.g., from about 0.02 % to about 1 % or from about 0.02 % to about 0.1 % by weight, based on the combined weight of the epoxy and isocyanate starting materials.

The reaction is usually carried out in the absence of a solvent. The reaction temperature will usually range from about 150°C to about 180°C. Preferably, the reaction is conducted at a temperature of from about 155°C to about 175°C. Most preferably, the reaction is conducted at a temperature of from about 160°C to about 165°C.

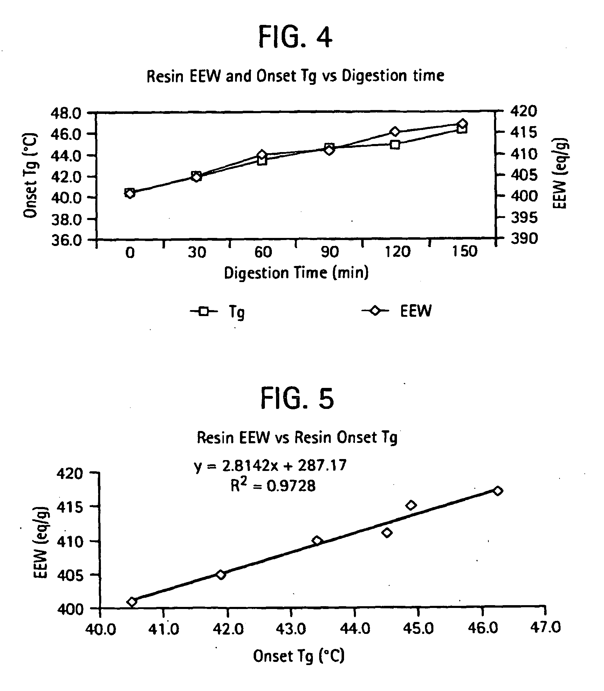

The thermosetting polymer of the present invention preferably has an equivalent epoxy weight (EEW) of at least about 330, e.g., at least about 350, at least about 380, or at least about 400, but usually not higher than about 1,000, e.g., not higher than about 500. As illustrated in Figure 5, there is a relationship between the EEW and the onset glass transition temperature, Tg, of the polymer, with the onset glass transition temperature increasing with increasing EEW. The EEW (and the onset glass transition temperature) can in turn be increased by increasing the digestion (incubation) time at elevated (e.g., reaction) temperature after the completion of the addition of the isocyanate components to the epoxy resin (as illustrated in Figure 4). While not wishing to be bound by any theory, it is speculated that during the digestion (incubation) period at elevated temperature hydroxy groups which are present in the polymer (derived from the hydroxy group containing epoxy resin starting material) react with epoxy groups of the polymer in the presence of a catalyst to result in branching of the polymer molecules and thus, an increased EEW (and an increased onset glass transition temperature).

The EEW is mainly dependent on the duration of the digestion period and the digestion temperature. For example, the desired EEW can be reached by controlling the digestion time. The preferred digestion temperature is in the range of from about 160°C. to about 180°C, e.g., from about 165°C to about 175°C.

In order to reach a desirable EEW, the epoxy resin (with or without hydroxy groups) may also be combined with one or more di- or multifunctional nucleophilic compounds. These compounds can be added to the epoxy resin(s) before or during the polyisocyanate addition and/or after the polyisocyanate addition has been completed. Non-limiting examples of these nucleophilic compounds include amine-curing agents such as, e.g., dicyandiamide and diaminodiphenylmethane, polycarboxylic acids and anhydrides such as, e.g., phthalic anhydride, tetrahydrophthalic anhydride (THPA), methyl tetrahydrophthalic anhydride (MTHPA), hexahydrophthalic anhydride (HHPA), methyl hexahydrophthalic anhydride (MHHPA), nadic methyl anhydride (NMA), succinic anhydride and maleic anhydride, and phenolic compounds such as, e.g., tris(hydroxyphenyl)ethane or -methane, polyols such as, e.g., glycerin and tris(hydroxymethyl)methane, and the like; and mixtures thereof.

The powder coating composition of the present invention will usually comprise from about 10% to about 99% by weight of the thermosetting polymer(s) of the present invention, based on a total weight of the composition. The powder coating composition of the present invention will usually comprise at least about 10%, e.g., at least about 30%, at least about 50% or at least about 60%, but usually not more than about 99%, e.g., not more than about 95%, not more than about 90% or not more than about 85% by weight of the thermosetting polymer(s) of the present invention, based on the total weight of the composition.

Further components of the composition of the present invention may include, but are not limited to, additives selected from curing agents and curing accelerators for the crosslinking reaction between, e.g., epoxy groups and/or epoxy groups and hydroxy groups, pigments, flow control agents and fillers. Specific examples of these additives are well known to those skilled in the art.

Non-limiting examples of suitable curing agents include, but are not limited to, amine-curing agents such as dicyandiamide, diaminodiphenylmethane and diaminodiphenylsulfone, polyamides, polyaminoamides, polymeric thiols, polycarboxylic acids and anhydrides such as phthalic anhydride, letrahydrophthalic anhydride (THPA), methyl tetrahydrophthalic anhydride (MTHPA), hexahydrophthalic anhydride (HHPA), methyl hexahydrophthalic anhydride (MHHPA), nadic methyl anhydride (NMA), polyazealic polyanhydride, succinic anhydride, maleic anhydride and styrene-maleic anhydride copolymers, as well as phenolic curing agents such as phenol novolac resins; and mixtures thereof.

Non-limiting examples of suitable curing accelerators include, but are not limited to, substituted or epoxy-modified imidazoles such as 2-methylimidazole, 2-phenyl imidazole and 2-ethyl-4-methyl imidazole, tertiary amines such as triethylamine, tripropylamine and tributylamine, phosphonium salts such as ethyltriphenylphosphonium chloride, ethyltriphenylphosphonium bromide and ethyltriphenylphosphonium acetate, and ammonium salts such as benzyltrimethylammonium chloride and benzyltrimethylammonium hydroxide; and mixtures thereof. Curing agents and accelerators are preferably used in total amounts of from about 0.5% to about 20% by weight, based on the total weight of the powder coating composition.

The powder coating composition of the present invention may be prepared by any process which blends the components of the composition substantially uniformly. For example, dry blend, semi-dry blend or melt blend procedures may be used. The blend can then be pulverized to form the powder coating composition. Particles of the powder coating composition will preferably have a size of not more than about 300 microns.

The powder coating composition of the present invention can be applied to substrates by any desired powder coatings process such as, e.g., fluidized bed sintering (FBS), electrostatic powder coating (EPC) and electrostatic fluidized bed (EFB).

In the fluidized bed sintering (FBS) process a preheated substrate (e.g., a metal pipe) is immersed into the powder coating composition, which is kept suspended by a flow of air. The substrate to be coated is preheated to a temperature of, e.g., at least about 200°C,
e.g., at least about 240°C, but usually not higher than to about 350°C, e.g., not higher than about 300°C, and contacted with the fluidized bed (e.g., immersed therein). The immersion time of the substrate depends, *inter alia,* on the desired coating thickness.

In the electrostatic powder coating (EPC) process, the powder coating composition is blown by compressed air into an applicator where it is usually charged with a voltage of about 30 to about 100 kV by a high-voltage direct current, and sprayed onto the surface of the substrate to be coated. Then it is baked in a suitable oven. The powder adheres to the cold substrate due to its charge. Alternatively, the electrostatically charged powder can be sprayed onto a heated substrate such as a pipe and allowed to cure with the residual heat of the substrate or with the help of external heat.

In the electrostatic fluidized bed (EFB) process, the above procedures are combined by mounting annular or partially annular electrodes over a fluidized bed containing the powder so as to produce an electrostatic charge of, for example, about 50 to about 100 kV. Substrates are heated at temperatures specific for the powder coating to fully cure.

Numerous substrates can be coated with the powder coating composition of the present invention. The preferred substrates are metals (e.g., iron, steel, copper), in particular metal pipes. Examples of other materials that may be coated with the powder coating composition of the present invention include ceramic and glass materials. The coating made from the powder coating composition of the present invention may find use, for example, as coating material for pipelines operating at high service temperatures (e.g., 110°C and higher).

The sintered and non sintered resins as well as the coating composition of the present invention can be also used to electrically insulate coils, transformers, and motors by coating the armatures and stators. It can also be used to coat magnet wire, bus bars, and torpid cores. Among other things, the above can be used by manufacturers of appliance fractional horsepower motors and other applications requiring UL Electrical Insulation Systems recognition. The FBE process ensures that each powder particle comprises all of the components that are necessary to obtain a complete cure and attain the stated performance properties. Properly formulated the polymers of this invention can also be used in electrical laminate applications.

The present invention will be further illustrated by the following non-limiting Examples. In these Examples, all reactions were carried out under dry conditions with a constant dynamic purge of nitrogen. Temperatures reported below are given with an accuracy of about ± 2°C. The reaction temperature was controlled with two lamps, one of which is connected to a temperature controller (DigiSense, ID# 1603ECTC-3). Epoxy equivalent weight (EEW) values were obtained via EEW titration using a Mettler DL55 Auto-Titrator. Values of onset glass transition temperature, Tg, were determined by Differential Scanning Calorimetry (DSC).

### Example 1 (Comparative)

A glass reactor was charged with 270.84 g of a substantially oligomer (hydroxy group)-free bisphenol A diglycidyl ether (D.E.R. 332™, The Dow Chemical Company). After heating to 160-165°C, 105 mg of 2-phenylimidazole was added. Once the 2-phenylimidazole was dissolved 80.90 g of PAPI 94 (polymeric MDI, The Dow Chemical Company, average molecular weight 325, average isocyanate functionality 2.5) was added drop wise at 165-180°C. Thereafter the reaction mixture was incubated at 180°C for 2.5 hours. The resultant polymer had an EEW of 375 g/eq. and showed an onset Tg of 40°C.

### Example 2 (Comparative)

A glass reactor was charged with 615.5 g ofbisphenol A diglycidyl ether (D.E.R. 383™ from The Dow Chemical Company) After heating to 160-165°C, 300 mg of 2-phenylimidazole (Aldrich, >98%) was added. Once the 2-phenylimidazole was dissolved 153 g of PAPI 94 was added drop wise at 165-180°C. Thereafter, the reaction mixture was incubated at 180°C for 0.75 hours. The resultant polymer had an EEW of 351 g/eq. and showed an onset Tg of 28.5°C.

### Example 3 (Comparative)

A glass reactor was charged with 1193 g of bisphenol A diglycidyl ether (D.E.R. 383™ from The Dow Chemical Company) After heating to 160-165°C, 500 mg of 2-phenylimidazole (Aldrich, > 98%) was added. Once the 2-phenylimidazole was dissolved 336.5 g of PAPI 94 (polymeric MDI, The Dow Chemical Company, average molecular weight 325, average isocyanate functionality 2.5) was added drop wise at 165-180°C. Then the reaction mixture was incubated at 180°C for 0.75 hours. The resultant polymer had an EEW of 384 g/eq. and showed an onset Tg of 37.4°C.

### Example 4 (Comparative)

A glass reactor was charged with 676.0 g of bisphenol A diglycidyl ether (D.E.R. 383™, The Dow Chemical Company). After heating to 160-165°C, 320 mg of 2-phenylimidazole was added. Once the 2-phenylimidazole was dissolved 169.0 g of PAPI 27 (polymeric MDI, The Dow Chemical Company, average molecular weight 387, average functionality 2.9) was added drop wise at 165-180°C. Then the reaction mixture was incubated at 180°C for 0.75 hours. The resultant polymer had an EEW of 346 g/eq. and showed an onset Tg of 26.6°C.

### Example 5 (Comparative)

A glass reactor was charged with 1200.0 g ofbisphenol A diglycidyl ether (D.E.R. 383™, The Dow Chemical Company). After heating to 160-165°C, 500 mg of 2-phenylimidazole was added. Once the 2-phenylimidazole was dissolved 319 g of PAPI 27 was added drop wise at 165-170°C. Then the reaction mixture was incubated at 170°C for 0.5 hours. The resultant polymer had an EEW of 360 g/eq. and showed an onset Tg of 31°C.

### Example 6

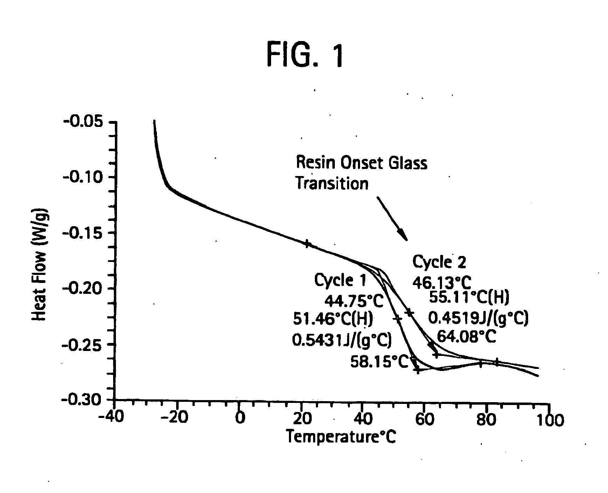

A glass reactor was charged with 1202 g of bisphenol A diglycidyl ether (D.E.R. 383™). After heating to 160-165°C, 500 mg of 2-phenylimidazole (Aldrich, >98%) was added. Once the 2-phenylimidazole was dissolved 127.8 g of toluene diisocyanate (VORANATE T-80, mixture of 80:20 isomer mixture of 2,4- and 2,6-toluene diisocyanate available from The Dow Chemical Company) was added over 10 minutes, followed by a step wise addition of 191.7 g of polymeric MDI (PAPI 27) at 165-175°C. After the addition of the polymeric MDI the reaction mixture was allowed to digest for 90 minutes. The resultant polymer had an EEW of 413 g/eq. and showed an onset g of 46°C. Figure 1 shows the DSC thermogram of the polymer.

### Example 7a

A glass reactor was charged with 1202 g of bisphenol A diglycidyl ether (D.E.R. 383™). After heating to 160-165°C, 500 mg of 2-phenylimidazole (Aldrich, >98%) was added. Once the 2-phenylimidazole was dissolved 319 g of a 60:40 (weight %) mixture of polymeric MDI (PAPI 27) and TDI (VORANATE T-80) was added drop wise at 165-175°C. Thereafter the reaction mixture was allowed to digest for 90 minutes. The resultant polymer had an EEW of 418 g/eq. and showed an onset Tg of 45°C.

### Example 7b

The same reactant ratios and reaction conditions were used as described in Example 7a, but the incubation at 180°C was conducted for 2.5 hours. Samples were analyzed for EEW, melt viscosity and Tg every 30 minutes. The obtained results are summarized in Table 1. below.

**Table 1.**

| **Digestion Time (min)** | **Onset Tg (°C)** | **EEW (eq/g)** | **Melt Viscosity (mPa.s)** | | |
|---|---|---|---|---|---|
| **0** | ***40.5*** | ***401*** | ***6600*** | ***Extrapolated Values*** | |
| **30** | ***41.9*** | **405** | **6628** | **Actual Values** | |
| **60** | **43.4** | **410** | **6618** | | |
| **90** | **44.5** | **411** | **6598** | | |
| **120** | **44.9** | **415** | **6692** | | |
| **150** | **46.3** | **417** | **6999** | | |

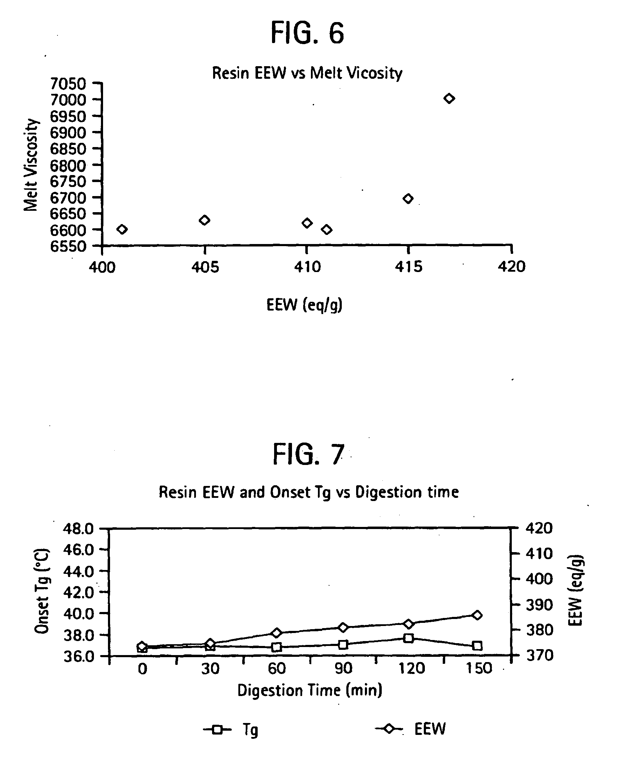

Figure 4 illustrates the increase of the polymer EEW and Tg with an increase in the duration of the digestion period for a polymer which was made in a scale up of the above procedure. The relationships between the EEW and the onset Tg and the melt viscosity for this polymer are shown in Table 1. and graphically represented in Figures 5 and 6.

As can be seen, there is an approximately linear increase of both the EEW and the Tg of the polymer with increasing digestion time. The melt viscosity is essentially independent of the EEW up to an EEW of about 411 and starts to increase significantly at an EEW of about 415.

### Example 7c

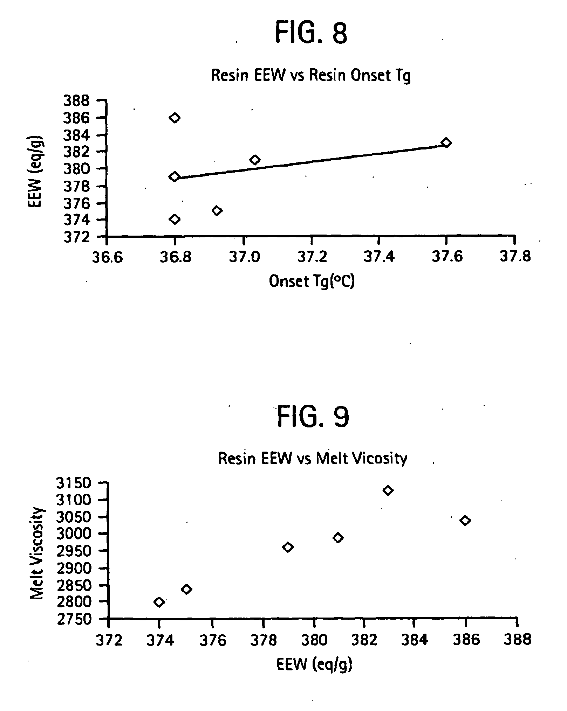

Example 7b (scale up version) was repeated but replacing the bisphenol A diglycidyl ether by the substantially oligomer (hydroxy group)-free bisphenol A diglycidyl ether employed in Example 1 above (D.E.R. 332™). Figure 7 shows that the polymer EEW and the Tg of the resultant polymer are substantially unaffected by an increase in the duration of the digestion period. The relationships between the EEW and the onset Tg and the melt viscosity for this polymer are shown in Table 11. below and graphically represented in Figures 8 and 9.

**Table 11.**

| **Digestion Time (min)** | **Onset Tg (°C)** | **EEW (eq/g)** | **Melt Viscosity (mPa.s)** | | |
|---|---|---|---|---|---|
| **0** | ***36.8*** | ***374*** | ***2800*** | ***Extrapolated Valves*** | |
| **30** | **36.9** | **375** | **2838** | **Actual Values** | |
| **60** | **36.8** | **379** | **2960** | | |
| **90** | **37.0** | **381** | **2988** | | |
| **120** | **37.6** | **383** | **3126** | | |
| **150** | **36.8** | **386** | **3035** | | |

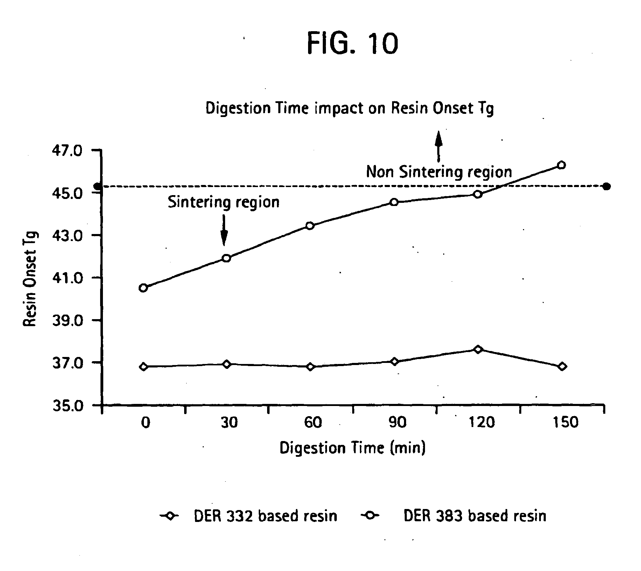

Figure 10 illustrates and compares the impact of the digestion time on the onset Tg for the polymers of Examples 7b and 7c. As can be seen, an increase in the digestion time significantly increases the Tg of the polymer made from the oligomer (hydroxy group)-containing bisphenol A diglycidyl ether but has substantially no effect on the Tg of the polymer which is made from the bisphenol A diglycidyl ether which is substantially free of oligomers (hydroxy groups).

### Example 8

A glass reactor was charged with 700 g of bisphenol A diglycidyl ether (D.E.R. 383™). After heating to 160-165°C, 350 mg of 2-phenylimidazole (Aldrich, >98%) was added. Once the 2-phenylimidazole was dissolved 191.4 g of a 80:20 (weight %) mixture of polymeric MDI (PAPI 27) and TDI (VORANATE T-80) was added drop wise at 165- 175°C. Thereafter the reaction mixture was allowed to digest for 90 minutes. The resultant polymer had an EEW of 415 g/eq. and showed an onset Tg of 45.3°C.

### Example 9 (Comparative)

A glass reactor was charged with 400.1 g of bisphenol A diglycidyl ether (D.E.R. 332™, The Dow Chemical Company). After heating to 160-165°C, 154 mg of 2-phenylimidazole was added. Once the 2-phenylimidazole was dissolved 106.34 g of PAPI 27 and TDI (60:40 mixture of 2,4- and 2,6-isomers) was added drop wise at 165-180°C. Thereafter the reaction mixture was incubated at 180°C for 2.5 hours. The resultant polymer had an EEW of 386 g/eq. and showed an onset Tg of 37°C. When 6.28 g of tris (hydroxyphenyl)ethane was added after 0.5 hour incubation time and the incubation was continued for two more hours, the resultant polymer had an EEW of 410 and an onset Tg of 43°C.

### Example 10 (Comparative)

A Fusion-Bonded Epoxy coating powder formulation was prepared by compounding 452.2 g of the polymer prepared in Example 2, 16.4 g of Amicure CG 1200 (dicyandiamide powder available from Air Products), 6.9 g of Epicure P 101 (2-methylimidazole adduct with bisphenol A epoxy resin available from Shell Chemical), 4.6 g of Curezol 2PHZ-PW (imidazole epoxy hardener available from Shikoku), 4.6 g of Modaflow Powder III (flow modifier, ethyl acrylate/2-ethylhexylacrylate copolymer in silica carrier manufactured by UCB Surface Specialties of St. Louis, Mo), 120.6 g of Minspar 7 (feldspar filler) and 3.0 g of Cab-O-Sil M 5 (colloidal silica available from Cabot Corp.). A steel bar heated at 242°C was immersed into the resulting coating powder, then allowed to cure for 2 min at 242°C and water quenched for 10 minutes. The resulting Fusion-Bonded Epoxy coating showed an onset Tg of 159°C and a good adhesion to the steel substrate.

### Example 11 (Comparative)

A Fusion Bonded Epoxy coating powder formulation was prepared by compounding 564.8 g of the polymer prepared in Example 3, 18.4 g of Amicure CG 1200, 8.5 g of Epicure P 101, 5.6 g of Curezol 2PHZ-PW, 5.6 g of Modaflow Powder III, 147 g of Minspar 7 and 3.8 g of Cab-O-Sil M 5. A steel bar heated at 242°C was immersed into the resulting coating powder then allowed to cure for 2 minutes at 242°C and water quenched for 10 minutes. The resulting Fusion-Bonded Epoxy coating showing an onset Tg of 160°C and a good adhesion to the steel substrate.

### Example 12 (Comparative)

A Fusion Bonded Epoxy powder coating formulation was prepared by compounding 468.2 g of the polymer prepared in Example 4, 17.1 g of Amicure CG 1200, 7.1 g of Epicure P 101, 4.7 g of Curezol 2PHZ-PW, 4.7 g of Modaflow Powder III, 123.4 g of Minspar 7 and 3.1 g of Cab-O-Sil M 5. A steel bar heated at 242°C was immersed into the powder to result in a Fusion-Bonded Epoxy coating showing an onset Tg of 165°C and a good adhesion to the steel substrate.

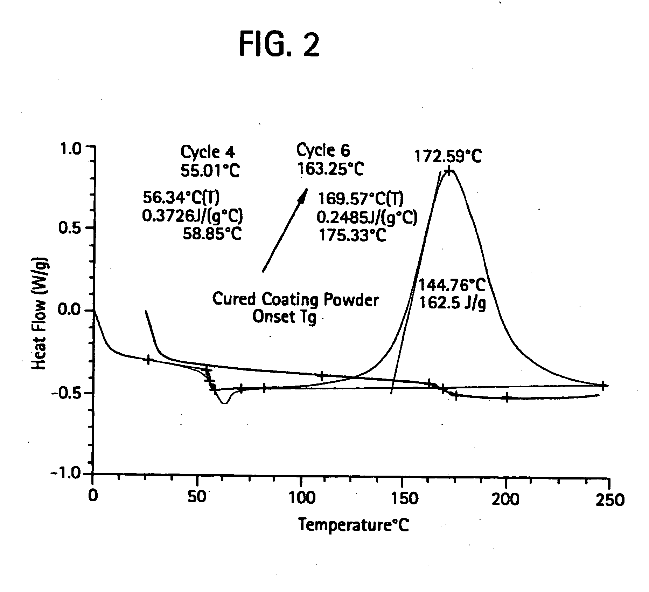

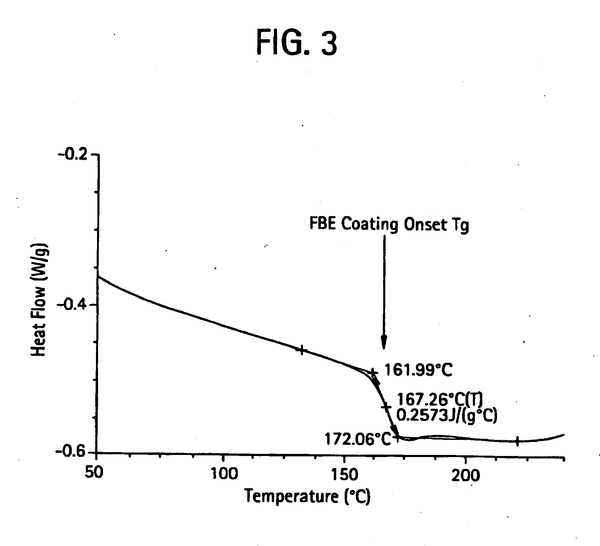

Figure 2 shows the DSC thermogram of the cured powder coating formulation and Figure 3 shows the DSC thermogram of the corresponding FBE coating.

### Example 13 (Comparative)

A Fusion Bonded Epoxy powder coating formulation was prepared by compounding 752.3 g of the polymer prepared in Example 5, 26.61 g of Amicure CG 1200, 11.3 g of Epicure P 101, 7.49 g of Curezol 2PHZ-PW, 5 g of Modaflow Powder III, 197.3 g of Minspar 7 and 5.0 g of Cab-O-Sil M 5. A steel bar heated at 242°C was immersed into the powder to result in a Fusion-Bonded Epoxy coating showing an onset Tg of 163°C and a good adhesion to the steel substrate.

### Example 14

A Fusion Bonded Epoxy powder coating formulation was prepared by compounding 602.9 g of the polymer prepared in Example 6, 18.35 g of Amicure CG 1200, 9.22 g of Epicure P 101, 10.5 g of Curezol 2PHZ-PW, 4 g of Modaflow Powder III, 155.0 g of Minspar 7 and 4.0 g of Cab-O-Sil M 5. A steel bar heated at 242°C was immersed into the powder to result in a Fusion-Bonded Epoxy coating showing an onset Tg of 162°C and good adhesion to the steel substrate.

### Example 15

A Fusion Bonded Epoxy powder coating formulation was prepared by compounding 468.2 g of the polymer prepared in Example 7a, 17.07 g of Amicure CG 1200, 7.01 g of Epicure P 101, 4.7 g of Curezol 2PHZ-PW, 4.7 g of Modaflow Powder III, 123.4 g of Minspar 7 and 3.1 g of Cab-O-Sil M 5. A steel bar heated at 242°C was immersed into the powder to result in a Fusion-Bonded Epoxy coating showing an onset Tg of 160°C and good adhesion to the steel substrate.

### Example 16

A Fusion Bonded Epoxy powder coating formulation was prepared by compounding 603 g of the polymer prepared in Example 8, 18.43 g of Amicure CG 1200, 9.4 g of Epicure P 101, 10.62 g of Curezol 2PHZ-PW, 4.0 g of Modaflow Powder III, 155 g of Minspar 7 and 4.0 g of Cab-O-Sil M 5. A steel bar heated at 242°C was immersed into the powder to result in a Fusion-Bonded Epoxy coating showing an onset Tg of 163 °C and good adhesion to the steel substrate.

The following Table III. summarizes Formulation Examples 10-16.

**Table III.**

| **Isocyanate Modified Epoxy Resins** | | | | | | | | | |
|---|---|---|---|---|---|---|---|---|---|
| Polymer from Example No. | Liquid Epoxy Resin Type | Isocyanate Type | Isocyanate Content (Weight %) | EEW (eq/g) | Polymer Onset Tg (°C) | Digestion Time (hrs) | Coating Powder Onset Tg (°C) | FBE Coating Onset Tg (°C) | Formulation From Example No. |
| 1 (Comparative) | D.E.R 332 | PAPI 94 | 23 | 375 | 40.0 | 2.5 | | | |
| 2 (Comparative) | D.E.R. 383 | PAPI 94 | 20 | 351 | 28.5 | 0.75 | 162 | *159* | 10 (Comparative) |
| 3 (Comparative) | D.E.R 383 | PAPI 94 | 22 | 384 | 37.4 | 0.75 | 163 | *160* | 11 (Comparative) |
| 4 (Comparative) | D.E.R. 332 | PAPI 27 | 20 | 346 | 26.6 | 0.75 | 166 | *165* | 12 (Comparative) |
| 5 (Comparative) | D.E.R. 383 | PAPI 27 | 21 | 360 | 31.0 | 0.50 | 163 | *163* | 13 (Comparative) |
| 6 | DER 383 | PAPI 27/TDI (60/40) Step Addition | 21 | 413 | 46 | 1.5 | 163 | *162* | 14 |
| *7a* | *DER 383* | *PAPI 27*/*TDI (60*/*40) Mix Addition* | *21* | *418* | *45* | 1.5 | *161* | *160* | 15 |
| *7b* | *DER 383* | *PAPI 27*/*TDI (60*/*40) Mix Addition* | *21* | *417* | *46.3* | 2.5 | | | |
| 7c | DER *332* | *PAPI 27*/*TDI (60*/*40) Mix Addition* | *21* | *386* | *36.8* | 2.5 | | | |
| 8 | D.E.R 383 | PAPI 27/TDI (80/20) Mix Addition | 21 | 415 | 45.3 | 1.5 | 165 | *163* | 16 |
| 9 (Comparative) | DER 332 | PAPI 27/TDI (60/40) Mix Addition plus THPE | 21 | 410 | 43.0 | 2.5 and 0.5 | | | |

## Claims

1. A thermosetting epoxy-terminated oxazolidinone ring containing polymer, wherein the polymer is obtainable by reacting at least one of (a1) at least one hydroxy group containing epoxy resin and (a2) a combination of at least one epoxy resin and at least one di- or multifunctional nucleophilic compound that forms crosslinks between epoxy groups with (b) two or more polyisocyanate compounds comprising toluene diisocyanate (TDI) and polymeric MDI in the presence of (c) at least one catalyst which promotes formation of oxazolidinone rings and a branching of the polymer and wherein the polymer in an uncured state has an onset glass transition temperature of at least 45°C and shows an onset glass transition temperature in a cured state of at least 160°C as determined by Differential Scanning Calorimetry (DSC).

2. The polymer of claim 1, wherein the at least one hydroxy group containing epoxy resin comprises a diglycidyl ether; and wherein at least 10% of the diglycidyl ether molecules are hydroxy group containing oligomers.

3. The polymer of claim 1, wherein the at least one hydroxy group containing epoxy resin comprises bisphenol A diglycidyl ether; and wherein a weight ratio of bisphenol A diglycidyl ether and (b) the two or more polyisocyanate compounds is from 77:23 to 81:19.

4. The polymer of claim 1, wherein a weight ratio of polymeric MDI to TDI is from 10:90 to 90:10.

5. The polymer of claim 1, wherein the polymer has a ratio of oxazolidinone rings to isocyanurate rings in the polymer of from 95:5 to 100:0; and wherein the polymer has an epoxy equivalent weight of at least 400.

6. The polymer of claim 1, wherein the polymer comprises a powder coating composition for producing a fusion-bonded epoxy coating.

7. A thermosetting powder coating composition, wherein the composition comprises (a) a thermosetting polymer according to any one of claims 1 to 6, and (b) one or more curing catalysts for (a).

8. A substrate having thereon a fusion-bonded epoxy coating made from the powder coating composition of claim 7; wherein the substrate comprises a metal substrate; and wherein the substrate comprises a pipe.

9. A method for providing a substrate with a fusion-bonded epoxy (FBE) coating, wherein the method comprises subjecting the substrate to a powder coating process with the powder coating composition of claim 7.

10. A coated substrate made by the method of claim 9.

11. A method of making an epoxy-terminated oxazolidinone ring containing polymer according to claim 1, wherein the method comprises
(i) adding, under conditions which favor a formation of oxazolidinone rings over a formation of isocyanurate rings, two or more polyisocyanate compounds comprising toluene diisocyanate (TDI) and polymeric MDI to a mixture of (a1) at least one hydroxy group containing epoxy resin and/or (a2) a combination of at least one epoxy resin and at least one di- or multifunctional nucleophilic compound that forms crosslinks between epoxy groups and (b) at least one compound which catalyzes a reaction between epoxy groups and isocyanate groups and promotes a branching of the polymer; wherein the addition step is carried out at a temperature of at least 150°C, and
(ii) upon completion of the addition according to (i), keeping a resultant mixture at a temperature of at least 160°C for a time which is sufficient for an epoxy-terminated oxazolidinone ring containing polymer to branch in the presence of (b) and to afford an onset glass transition temperature of the polymer of at least 45°C.

12. The method of claim 11, wherein TDI and polymeric MDI are added separately; or wherein a mixture of TDI and polymeric MDI is added.

13. The method of claim 11, wherein the addition of the two or more polyisocyanate compounds step of (i) is carried out in two or more steps; and wherein the addition step (i) is carried out at a temperature of at least 150°C; and wherein the elevated temperature in step (ii) is at least 160°C.

14. The method of claim 11, wherein (a1) comprises bisphenol A diglycidyl ether; and wherein at least 10% of the diglycidyl ether molecules are hydroxyl group containing oligomers.

15. A polymer made by the method of claim 11.

## Patentansprüche

1. Ein wärmehärtendes, epoxidterminiertes, Oxazolidinonring enthaltendes Polymer, wobei das Polymer erhalten werden kann, indem mindestens eines von (a1) mindestens einem Hydroxygruppe enthaltenden Epoxidharz und (a2) einer Kombination von mindestens einem Epoxidharz und mindestens einer di- oder multifunktionellen nukleophilen Verbindung, die Querverbindungen zwischen Epoxidgruppen bildet, mit (b) zwei oder mehr Polyisocyanatverbindungen, die Toluendiisocyanat (TDI) und polymeres MDI beinhalten, in Gegenwart von (c) mindestens einem Katalysator, der die Bildung von Oxazolidinonringen und ein Verzweigen des Polymers fördert, zur Reaktion gebracht wird, und wobei das Polymer in einem unausgehärteten Zustand eine Einsetzglasübergangstemperatur von mindestens 45 °C aufweist und in einem ausgehärteten Zustand eine Einsetzglasübergangstemperatur von mindestens 160 °C zeigt, wie durch Differenzialscanningkalorimetrie (DSK) bestimmt.

2. Polymer gemäß Anspruch 1, wobei das mindestens eine Hydroxygruppe enthaltende Epoxidharz einen Diglycidylether beinhaltet; und wobei mindestens 10 % der Diglycidylethermoleküle Hydroxygruppe enthaltende Oligomere sind.

3. Polymer gemäß Anspruch 1, wobei das mindestens eine Hydroxygruppe enthaltende Epoxidharz Bisphenol-A-diglycidylether beinhaltet; und wobei ein Gewichtsverhältnis von Bisphenol-A-diglycidylether und (b) den zwei oder mehr Polyisocyanatverbindungen von 77:23 bis 81:19 beträgt.

4. Polymer gemäß Anspruch 1, wobei ein Gewichtsverhältnis von polymerem MDI zu TDI von 10:90 bis 90:10 beträgt.

5. Polymer gemäß Anspruch 1, wobei das Polymer ein Verhältnis von Oxazolidinonringen zu Isocyanuratringen in dem Polymer von von 95:5 bis 100:0 aufweist; und wobei das Polymer ein Epoxidäquivalentgewicht von mindestens 400 aufweist.

6. Polymer gemäß Anspruch 1, wobei das Polymer eine Pulverbeschichtungszusammensetzung zum Herstellen einer Dickschicht-Epoxidbeschichtung beinhaltet.

7. Eine wärmehärtende Pulverbeschichtungszusammensetzung, wobei die Zusammensetzung (a) ein wärmehärtendes Polymer gemäß einem der Ansprüche 1 bis 6 und (b) einen oder mehrere Aushärtungskatalysatoren für (a) beinhaltet.

8. Ein Substrat, das darauf eine Dickschicht-Epoxidbeschichtung aufweist, die aus der Pulverbeschichtungszusammensetzung gemäß Anspruch 7 erzeugt wurde; wobei das Substrat ein Metallsubstrat beinhaltet; und wobei das Substrat ein Rohr beinhaltet.

9. Ein Verfahren zum Versehen eines Substrats mit einer Dickschicht-Epoxidbeschichtung (FBE-Beschichtung), wobei das Verfahren beinhaltet, das Substrat einem Pulverbeschichtungsprozess mit der Pulverbeschichtungszusammensetzung gemäß Anspruch 7 zu unterziehen.

10. Ein beschichtetes Substrat, das durch das Verfahren gemäß Anspruch 9 erzeugt wird.

11. Ein Verfahren zum Erzeugen eines epoxidterminierten, Oxazolidinonring enthaltenden Polymers gemäß Anspruch 1, wobei das Verfahren Folgendes beinhaltet:
(i) Hinzugeben, unter Bedingungen, die eine Bildung von Oxazolidinonringen gegenüber einer Bildung von Isocyanuratringen begünstigen, von zwei oder mehr Polyisocyanatverbindungen, die Toluendiisocyanat (TDI) und polymeres MDI beinhalten, zu einer Mischung von (a1) mindestens einem Hydroxygruppe enthaltenden Epoxidharz und/oder (a2) einer Kombination von mindestens einem Epoxidharz und mindestens einer di- oder multifunktionellen nukleophilen Verbindung, die Querverbindungen zwischen Epoxidgruppen bildet, und (b) mindestens einer Verbindung, die eine Reaktion zwischen Epoxidgruppen und Isocyanatgruppen katalysiert und eine Verzweigung des Polymers fördert; wobei der Zugabeschritt bei einer Temperatur von mindestens 150 °C ausgeführt wird, und
(ii) bei Abschluss der Zugabe gemäß (i), Halten einer resultierenden Mischung bei einer Temperatur von mindestens 160 °C für eine Zeit, die ausreicht, damit ein epoxidterminiertes, Oxazolidinonring enthaltendes Polymer in Gegenwart von (b) verzweigt und eine Einsetzglasübergangstemperatur des Polymers von mindestens 45 °C ermöglicht.

12. Verfahren gemäß Anspruch 11, wobei TDI und polymeres MDI separat hinzugegeben werden; oder wobei eine Mischung von TDI und polymerem MDI hinzugegeben wird.

13. Verfahren gemäß Anspruch 11, wobei die Zugabe der zwei oder mehr Polyisocyanatverbindungen von Schritt (i) in zwei oder mehr Schritten ausgeführt wird; und wobei der Zugabeschritt (i) bei einer Temperatur von mindestens 150 °C ausgeführt wird; und wobei die erhöhte Temperatur in Schritt (ii) mindestens 160 °C beträgt.

14. Verfahren gemäß Anspruch 11, wobei (a1) Bisphenol-A-diglycidylether beinhaltet; und wobei mindestens 10 % der Diglycidylethermoleküle Hydroxylgruppe enthaltende Oligomere sind.

15. Ein Polymer, das durch das Verfahren gemäß Anspruch 11 erzeugt wird.

## Revendications

1. Un polymère contenant un cycle oxazolidinone à terminaison époxy thermodurcissable, le polymère pouvant être obtenu en faisant réagir au moins un élément parmi (a1) au moins une résine époxy contenant un groupe hydroxy et (a2) une combinaison d'au moins une résine époxy et au moins un composé nucléophile di- ou multifonctionnel qui forme des réticulations entre des groupes époxy avec (b) deux composés polyisocyanates ou plus comprenant du diisocyanate de toluène (TDI) et du MDI polymère en présence de (c) au moins un catalyseur augmentant la vitesse de formation de cycles oxazolidinone et une ramification du polymère, et le polymère dans un état non durci ayant une température de transition vitreuse initiale d'au moins 45 °C et présentant une température de transition vitreuse initiale dans un état durci d'au moins 160 °C tel que déterminé par calorimétrie différentielle à balayage (DSC).

2. Le polymère de la revendication 1, dans lequel cette au moins une résine époxy contenant un groupe hydroxy comprend un éther diglycidylique ; et dans lequel au moins 10 % des molécules d'éther diglycidylique sont des oligomères contenant un groupe hydroxy.

3. Le polymère de la revendication 1, dans lequel cette au moins une résine époxy contenant un groupe hydroxy comprend de l'éther diglycidylique du bisphénol A ; et dans lequel un rapport pondéral éther diglycidylique du bisphénol A sur (b) les deux composés polyisocyanates ou plus va de 77/23 à 81/19.

4. Le polymère de la revendication 1, dans lequel un rapport pondéral MDI polymère sur TDI va de 10/90 à 90/10.

5. Le polymère de la revendication 1, le polymère ayant un rapport cycles oxazolidinone sur cycles isocyanurate dans le polymère allant de 95/5 à 100/0 ; et le polymère ayant un poids équivalent d'époxy d'au moins 400.

6. Le polymère de la revendication 1, le polymère comprenant une composition pour revêtement en poudre destinée à produire un revêtement en époxy liée par fusion.

7. Une composition pour revêtement en poudre thermodurcissable, la composition comprenant (a) un polymère thermodurcissable selon une quelconque des revendications 1 à 6 ; et (b) un ou des catalyseurs de durcissement pour (a).

8. Un substrat recouvert d'un revêtement en époxy liée par fusion fabriqué à partir de la composition pour revêtement en poudre de la revendication 7 ; le substrat comprenant un substrat en métal ; et le substrat comprenant un tuyau.

9. Une méthode destinée à fournir un substrat possédant un revêtement en époxy liée par fusion (FBE), la méthode comprenant le fait de soumettre le substrat à un procédé de poudrage en se servant de la composition pour revêtement en poudre de la revendication 7.

10. Un substrat revêtu fabriqué par la méthode de la revendication 9.

11. Une méthode de fabrication d'un polymère contenant un cycle oxazolidinone à terminaison époxy selon la revendication 1, la méthode comprenant
(i) l'ajout, dans des conditions favorisant une formation de cycles oxazolidinone plutôt qu'une formation de cycles isocyanurate, de deux composés polyisocyanates ou plus comprenant du diisocyanate de toluène (TDI) et du MDI polymère dans un mélange de (a1) au moins une résine époxy contenant un groupe hydroxy et/ou (a2) une combinaison d'au moins une résine époxy et au moins un composé nucléophile di- ou multifonctionnel qui forme des réticulations entre des groupes époxy et (b) au moins un composé qui catalyse une réaction entre des groupes époxy et des groupes isocyanate et augmente la vitesse d'une ramification du polymère ; dans laquelle l'étape d'ajout est réalisée à une température d'au moins 150 °C, et
(ii) une fois l'ajout selon (i) terminé, le maintient d'un mélange résultant à une température d'au moins 160 °C pendant une durée suffisante pour qu'un polymère contenant un cycle oxazolidinone à terminaison époxy se ramifie en présence de (b) et pour conférer au polymère une température de transition vitreuse initiale d'au moins 45 °C.

12. La méthode de la revendication 11, dans laquelle le TDI et le MDI polymère sont ajoutés séparément ; ou dans laquelle un mélange de TDI et de MDI polymère est ajouté.

13. La méthode de la revendication 11, dans laquelle l'ajout des deux composés polyisocyanates ou plus de l'étape (i) est réalisé en deux étapes ou plus ; et dans laquelle l'étape d'ajout (i) est réalisée à une température d'au moins 150 °C ; et dans laquelle la température élevée à l'étape (ii) est d'au moins 160 °C.

14. La méthode de la revendication 11, dans laquelle (a1) comprend de l'éther diglycidylique du bisphénol A ; et dans laquelle au moins 10 % des molécules d'éther diglycidylique sont des oligomères contenant un groupe hydroxy.

15. Un polymère fabriqué par la méthode de la revendication 11.
